# EUROPÄISCHE PATENTSCHRIFT

(11) **EP 3 408 050 B1**
(45) Veröffentlichungstag und Bekanntmachung des Hinweises auf die Patenterteilung: **26.10.2022**
(21) Anmeldenummer: 17702597.0
(22) Anmeldetag: 27.01.2017
(51) Int. Cl.: B23K 26/06, B23K 26/073, B23K 26/064, B23K 26/066, B23K 26/03

(54) **VORRICHTUNG UND VERFAHREN ZUR THERMISCHEN BEARBEITUNG**
APPARATUS AND METHOD FOR THERMAL PROCESSING
DISPOSITIF ET MÉTHODE POUR UN PROCÉDÉ D'USINAGE THERMIQUE

(30) Priorität: 29.01.2016 DE 102016201418
(43) Veröffentlichungstag der Anmeldung: 05.12.2018
(73) Patentinhaber: Kjellberg-Stiftung, 03238 Finsterwalde (DE)
(72) Erfinder: SCHNICK, Michael, 09353 Oberlungwitz (DE); BROCKE, Nils, 01309 Dresden (DE)
(74) Vertreter: Pfenning, Meinig & Partner mbB
(86) Internationale Anmeldenummer: PCT/EP2017/051856
(87) Internationale Veröffentlichungsnummer: WO 2017/129795

(56) Entgegenhaltungen:
- EP-A1- 2 620 249
- DE-A1- 4 331 262
- DE-A1- 19 944 470
- DE-A1-102009 057 566
- DE-A1-102012 207 220
- DE-A1-102014 208 435
- FR-A1- 2 823 688
- US-A1- 2007 000 877
- US-A1- 2008 170 291
- US-A1- 2015 260 985

## Beschreibung

Die vorliegende Erfindung betrifft eine Vorrichtung und ein Verfahren zur thermischen Bearbeitung innerhalb eines Bearbeitungsbereichs an einer Werkstückoberfläche mittels eines von mindestens einer Strahlungsquelle emittierten Laserstrahls.

Laserstrahlung wird oftmals zum Bearbeiten von Werkstücken, beispielsweise zum Schweißen, Schneiden oder Beschichten eingesetzt. Hierbei sorgt die durch die Laserstrahlung eingebrachte Energie für die angestrebte Veränderung des Werkstoffs. Nachteilig bei vielen Verfahren ist jedoch, dass die Laserstrahlung in ihrer Intensität, insbesondere in der lokalen Intensitätsverteilung, von außen nur unzureichend und grob einstellbar ist. Die Intensitätsverteilung folgt dabei üblicherweise einer Gauß-Verteilung im Brennfleck. Druckschrift DE 199 44 470 A1, welche als nächstliegender Stand der Technik vorgesehen ist, offenbart ein Verfahren und eine Vorrichtung zum Laserstrahlschweißen mit einem Zusatzwerkstoff. Druckschrift DE 10 2014 208 435 A1 handelt von einer Anordnung und einem Verfahren zum schichtweisen Erstellen einer Auftragsschicht. Aus Druckschrift DE 10 2012 207 220 A1 ist eine Strahlformung mittels einer Strahlformungseinrichtung bekannt.

Der vorliegenden Erfindung liegt daher die Aufgabe zugrunde, eine Vorrichtung und ein Verfahren zu entwickeln, mit dem in definierter Weise eine lokal definierte Intensitätsbeeinflussung von Laserstrahlung bei einer thermischen Bearbeitung von Werkstücken erfolgen kann.

Diese Aufgabe wird erfindungsgemäß gelöst durch eine Vorrichtung nach Anspruch 1 und ein Verfahren nach Anspruch 14. Vorteilhafte Ausgestaltungen und Weiterbildungen sind in den abhängigen Ansprüchen beschrieben.

Eine Vorrichtung, die keine Ausführungsform der Erfindung darstellt, zur thermischen Bearbeitung innerhalb eines Bearbeitungsbereichs an einer Werkstückoberfläche mittels eines von mindestens einer Strahlungsquelle emittierten Laserstrahls weist im Strahlengang des Laserstrahls mindestens ein Element auf, dass zwischen der mindestens einen Strahlungsquelle und dem Bearbeitungsbereich auf der Werkstückoberfläche angeordnet ist. Mit diesem mindestens einen Element ist die Intensität des Laserstrahls innerhalb des Bearbeitungsbereichs lokal definiert veränderbar. Alternativ oder zusätzlich ist durch eine definierte Ansteuerung mehrerer Strahlungsquellen die Intensität mindestens eines der Laserstrahlen innerhalb des Bearbeitungsbereichs lokal definiert veränderbar. Innerhalb des Bearbeitungsbereichs ist somit eine lokal definierte Verteilung der Intensität des auf die Werkstückoberfläche auftreffenden Laserstrahls erreichbar.

Durch die erzielte lokal definierte Verteilung der Intensität auf der Werkstückoberfläche wird auch eine Temperaturverteilung auf der Werkstückoberfläche bzw. im Volumen des Werkstücks beeinflusst und die gewünschte Oberflächenbearbeitung somit gezielter steuerbar. Indem hierfür die Intensität eines oder mehrerer Laserstrahlen im Strahlengang verändert wird bzw. bereits durch eine Ansteuerung der Strahlungsquellen eine entsprechende Anpassung der auf der Werkstückoberfläche erreichbaren Intensität erfolgt, kann dies sowohl effizient als auch mit geringem apparativem Aufwand erfolgen. Somit können prinzipiell einer oder vorzugsweise zwei oder mehr als zwei Laserstrahlen von außen bzw. extern in ihrer Intensität beeinflusst werden, so dass die gewünschte Intensität in der gewünschten räumlichen Verteilung die Werkstückoberfläche beeinflussen kann. Unter dem Bearbeitungsbereich soll hierbei insbesondere der Bereich verstanden werden, auf den Laserstrahlung auftrifft und der bevorzugt zeitgleich von mindestens zwei Laserstrahlen bearbeitet wird. Die Verteilung der Intensität kann hierbei sowohl inhomogen als auch homogen im Bearbeitungsbereich sein bzw. symmetrisch oder asymmetrisch ausgestaltet sein.

Es kann vorgesehen sein, dass die von mehreren Strahlungsquellen emittierten Laserstrahlen als einzelne Laserstrahlen auf den Bearbeitungsbereich gerichtet sind, so dass erst auf dem Bearbeitungsbereich die lokal definierte Verteilung der Intensität zum Ausbilden eines gewünschten Bearbeitungsprofils erreicht wird. Erfindungsgemäß können somit auch mindestens zwei, vorzugsweise mindestens drei, besonders vorzugsweise mindestens sechs Brennflecke durch eine entsprechende Anzahl von Strahlungsquellen oder ein entsprechendes Teilen mindestens eines einzelnen von einer einzigen Strahlenquelle emittierten Laserstrahls im Bearbeitungsbereich erzielt werden, deren räumliche Verteilung die lokal definierte Verteilung der Intensität der Laserstrahlung widerspiegelt.

Vorzugsweise sind die mehreren Strahlungsquellen und bzw. oder die Laserstrahlen ringförmig angeordnet, um ein möglichst gleichmäßiges Strahlungsfeld auf dem Bearbeitungsbereich zu erhalten. Unter einer ringförmigen Anordnung soll hierbei insbesondere jede Anordnung verstanden werden, bei der die Mittelpunkte der Strahlungsquellen und bzw. oder der Laserstrahlen durch eine geschlossene Linie, die frei ist von Knicken, verbunden sind. Es kann somit also eine ellipsenförmige Anordnung, insbesondere eine kreisförmige Anordnung vorliegen.

In besonders bevorzugter Weise sind die mehreren Strahlungsquellen und bzw. oder die Laserstrahlen in mindestens zwei Ringen angeordnet, um eine Flexibilität weiter zu erhöhen. Typischerweise sind die Ringe konzentrisch angeordnet, weisen also einen gemeinsamen Mittelpunkt auf. Auf jedem der Ringe kann eine gerade oder eine ungerade Anzahl von Strahlungsquellen bzw. Laserstrahlen angeordnet sein. Es kann vorgesehen sein, dass die Strahlungsquellen ungleichmäßig um eine mittlere Ausbreitungsachse angeordnet sind, insbesondere mit einem paarweise verschiedenen Winkelversatz, so dass Rückreflexionen in eine der Strahlungsquellen vermieden werden. Mehrere Laserstrahlen können durch eine gemeinsame Optik, d.h. strahlleitende und bzw. oder strahlformende optische Elemente, auf den Bearbeitungsbereich gerichtet sein, zumindest einer der Laserstrahlen kann aber auch eine eigene, von den weiteren Laserstrahlen abweichende Optik aufweisen. Vorzugsweise ist jede der Strahlungsquellen mit einem strahlleitenden und bzw. oder strahlformendem optischen Element versehen, die unabhängig voneinander einstellbar sind, so dass jeder der Laserstrahlen in seinen Eigenschaften unabhängig von den anderen Laserstrahlen durch das jeweilige optische Element beeinflussbar ist.

Typischerweise sind durch die gezielte Ansteuerung mehrere Strahlungsquellen gleichzeitig und unabhängig voneinander derart ansteuerbar, dass die Intensität des jeweils ausgesandten Laserstrahls geändert werden kann. Dies ermöglicht eine Vielzahl von Bearbeitungsmöglichkeiten durch Ansteuerung einzelner Strahlungsquellen. Diese Ansteuerung mehrerer Strahlungsquellen kann zeitlich auch verändert werden, so dass über die Zeit unterschiedliche Intensitätsverteilungen innerhalb des Bearbeitungsbereichs erhalten werden können. So kann eine erhöhte Intensität in Vorschubbewegungsrichtung vorn beispielsweise so verändert werden, dass zu einem nachfolgenden Zeitpunkt eine erhöhte Intensität neben der Vorschubachsrichtung oder Vorschubbewegungsrichtung hinten erreicht werden kann. Es kann auch eine kreis- oder ellipsenförmige Bewegung eines Bereichs erhöhter Intensität innerhalb des Bearbeitungsbereichs realisiert werden.

Mindestens einer der Laserstrahlen kann mit einer von den weiteren Laserstrahlen abweichenden Brennweite auf bzw. in den Bearbeitungsbereich gerichtet sein, um zusätzliche Einstellmöglichkeiten der Intensitätsverteilung auf der Werkstückoberfläche zu erhalten.

Die Brennweite eines der Laserstrahlen kann zudem mit einem refraktiven oder diffraktiven optischen Element beeinflussbar sein, um die Einstellung der Brennweite in einfacher Weise vornehmen zu können. Dies kann zum Beispiel eine Linse oder ein Glasträger, auf dem Mikrostrukturen ein optisches Gitter formen, sein. Vorzugsweise ist die Brennweite jedes der Laserstrahlen durch ein der den jeweiligen Laserstrahl emittierenden Strahlungsquelle zugeordnetes refraktives oder diffraktives optisches Element beeinflussbar.

Alternativ oder zusätzlich kann mindestens einer der Laserstrahlen mit einer von den übrigen Laserstrahlen unterschiedlichen Leistung in den Bearbeitungsbereich gerichtet sein. Somit kann bereits durch Einstellen der Leistung an der Laserstrahlungsquelle die Intensitätsverteilung auf der Werkstückoberfläche beeinflusst werden.

Es kann auch vorgesehen sein, dass mindestens einer der Laserstrahlen einen von den übrigen Laserstrahlen unterschiedlichen Strahlquerschnitt aufweist, um das Herausbilden der lokal definierten Intensitätsverteilung, insbesondere bei einer Überlagerung der Brennflecke innerhalb des Bearbeitungsbereichs, zu unterstützen.

Typischerweise wird dies dadurch erreicht, dass ein gegenüber der optischen Achse unter einem von 90° abweichenden Winkel angeordnetes (in anderen Worten also schief im Strahlengang stehendes) diffraktives oder refraktives optisches Element und bzw. oder eine Blende die Form, insbesondere den Strahlquerschnitt, mindestens eines der Laserstrahlen beeinflusst. Insbesondere kann hierfür ein diffraktives optisches Element (DOE) verwendet werden, das unter einem beliebigen Winkel, vorzugsweise 90°, zur optischen Achse im Strahlengang angeordnet ist.

Es kann vorgesehen sein, dass ein elektro-mechanisches Stellelement, vorzugsweise ein Motor oder ein Aktor, das mindestens eine diffraktive oder refraktive optische Element bewegt. In bevorzugter Weise ist diese Bewegung eine Rotationsbewegung, also ein Drehen, Neigen oder Kippen. Alternativ oder zusätzlich kann aber auch mindestens eine Linearbewegung durch das elektro-mechanisches Stellelement durchführbar sein, so dass das mindestens eine diffraktive oder refraktive optische Element in drei translatorischen Freiheitsgraden und drei rotatorischen Freiheitsgraden bewegbar sein kann. Alternativ oder zusätzlich kann das elektro-mechanische Stellelement auch die Strahlungsquelle selbst relativ zu dem diffraktiven oder refraktiven optischen Element bewegen.

Die lokal definierte Versteilung der Intensität des auf die Werkstückoberfläche auftreffenden Laserstrahls bzw. der auftreffenden Laserstrahlen ist typischerweise eine ringförmige Intensitätsverteilung. Diese wird vorzugsweise erreicht durch eine ringförmige Anordnung der Laserstrahlen in Bezug auf eine mittlere Propagationsrichtung der einzelnen Laserstrahlen zwischen der Strahlungsquelle und dem Bearbeitungsbereich.

Als Strahlungsquelle soll auch ein Ausgang der lichtleitenden Faser verstanden werden, da hier ein Laserstrahl emittiert wird.

Es kann vorgesehen sein, dass mindestens eine Strahlungsquelle mit einer lichtleitenden Faser versehen ist, typischerweise sind aber mehrere Strahlungsquellen jeweils mit lichtleitenden Fasern versehen, d. h. dass jeder der Strahlungsquellen eine lichtleitende Faser zugeordnet ist bzw. dass die lichtleitende Faser an dieser Strahlungsquelle angeordnet ist. Vorzugsweise sind mindestens zwei der lichtleitenden Fasern zu einem Faserbündel zusammengefasst sind, bei dem die lichtleitenden Fasern besonders vorzugsweise so dicht aneinander liegen, dass eine Kollimationsoptik für das Faserbündel genutzt werden kann. Durch eine einzige Kollimationsoptik, die beispielsweise als gemeinsame Kollimationsoptik für alle Fasern ausgestaltet sein kann, wird der Aufbau vereinfacht. Der Einsatz der lichtleitenden Fasern ermöglicht zudem eine flexiblere Führung der Strahlung. Schließlich kann hierdurch auch eine auf den Bearbeitungsbereich aufgebrachte Leistung der Laserstrahlung einfach erhöht werden, indem zusätzliche Strahlungsquellen, wie zum Beispiel zusätzliche Lasermodule, dem Faserbündel zugefügt werden bzw. die emittierten zusätzlichen Laserstrahlen ebenfalls durch die Kollimationsoptik geführt werden. Ebenso ist es auch möglich, lediglich eine oder einzelne der Strahlungsquellen mit einer lichtleitenden Faser zu versehen und die weiteren Strahlungsquellen ohne lichtleitende Fasern zu betreiben.

Bei Verwendung der lichtleitenden Fasern können insbesondere die Strahlungsquellen selbst beliebig orientiert sein, sofern die lichtleitenden Fasern derart angeordnet sind, dass eine ringförmige Intensitätsverteilung, beispielsweise durch eine ringförmige Anordnung von Ausgängen der lichtleitenden Fasern oder eine entsprechende Beeinflussung der Laserstrahlung durch optische Elemente, auf der Werkstückoberfläche erreicht wird.

Mehrere Strahlungsquellen können unabhängig voneinander durch den jeweiligen Strahlungsquellen zugeordnete regelbare oder steuerbare elektrische vorgeschaltete oder parallel geschaltete Widerstände ansteuerbar sein bzw. die Strahlungsquellen können einzeln mit vorgegebenen elektrischen Strömen oder Spannungen betrieben werden. Außerdem kann eine jeweilige Strahlungsquelle einzeln von einer steuerbaren oder regelbaren Stromquelle betreibbar und einzeln abschaltbar sein. Es ist auch möglich, die mehreren Strahlungsquellen unabhängig voneinander durch den jeweiligen Strahlungsquellen zugeordnete elektrische oder elektronische Bypassschaltungen anzusteuern. Hierdurch können schnell und gezielt die Intensitäten der einzelnen emittierten Laserstrahlen eingestellt werden. Falls mehrere Strahlungsquellen zu Emittergruppen zusammengefasst sind, können auch diese Emittergruppen gemeinsam durch einen einstellbaren elektrischen Widerstand und einem daraus resultierenden elektrischen Strom einstellbar sein.

Erfindungsgemäß liegt eine ungerade Anzahl von Strahlungsquellen und bzw. oder der Laserstrahlen vor, sofern mehrere Strahlungsquellen bzw. Laserstrahlen verwendet werden, da hierdurch eine direkte Rückreflexion in eine der Strahlungsquellen bzw. eine Beschädigung der Strahlungsquelle vermieden werden. Alternativ oder zusätzlich kann auch eine unsymmetrische Anordnung der Strahlungsquellen und bzw. oder der Laserstrahlen vorgesehen sein.

Es kann vorgesehen sein, mehrere Strahlungsquellen zu verwenden, die jeweils einen Laserstrahl emittieren können bzw. emittieren. Wenigstens einer der Laserstrahlen weist hierbei typischerweise eine von den übrigen Laserstrahlen verschiedene Polarisation auf. In besonders bevorzugter Weise ist die Polarisation der Laserstrahlen jeweils paarweise verschieden.

Alternativ oder zusätzlich werden erfindungsgemäß mehrerer Strahlungsquellen einander gegenüberliegende Strahlungsquellen Laserstrahlen unterschiedlicher Wellenlänge emittieren, um ein Risiko einer gegenseitigen Schädigung zu reduzieren und unterschiedliche Bearbeitungsarten zu ermöglichen.

Mindestens eine der Strahlungsquellen kann einen Wellenlängenfilter aufweisen, der nur für die von der jeweiligen Strahlungsquelle emittierte Wellenlänge des Laserstrahls transmissiv ist, d. h. insbesondere für andere Wellenlängen reflektiv ist. Hierdurch kann ein Eindringen von Streustrahlung aus anderen Strahlungsquellen vermieden werden.

Typischerweise weist mindestens eine der Strahlungsquellen eine optische Diode auf, um Beschädigungen durch eindringende Streustrahlung bzw. Rückreflexionen zu vermeiden. Bei linear polarisierter Strahlung ist die optische Diode typischerweise aus einem Polarisationsfilter und einem Zirkularpolarisator, d. h. einer λ/4-Platte aufgebaut. Es kann statt des Polarisationsfilters (oder zusätzlich dazu) aber auch ein polarisierender Strahlteiler, beispielsweise ein polarisierender Strahlteilerwürfel, verwendet werden.

Bei zirkular polarisierter Strahlung weist die optische Diode vorzugsweise ein Polarisationsfilter und bzw. oder einen polarisierenden Strahlteiler zur Aufteilung der zirkular polarisierten Strahlung in ihre linear polarisierten Bestandteile und bzw. oder einen Faraday-Rotator sowie ein Polaristionsfilter und bzw. oder einen polarisierenden Strahlteiler zum Vereinigen der linear polarisierten Einzelstrahlen auf.

Der Wellenlängenfilter und bzw. oder die optische Diode kann gegenüber einer Ausbreitungsrichtung des von der jeweiligen mit dem Wellenlängenfilter versehenen Strahlungsquelle geneigt bzw. verkippt sein, um eine Rückreflexion in die Strahlungsquelle zu vermeiden. Alternativ oder zusätzlich zu dem Wellenlängenfilter und der optischen Diode kann auch ein Polarisationsfilter zum Schutz der Strahlungsquelle verwendet werden.

Erfindungsgemäß ist eine Einrichtung zum Zuführen von Zusatzwerkstoff auf bzw. in den Bearbeitungsbereich vorhanden und der mindestens eine emittierte Laserstrahl ist so auf bzw. in den Bearbeitungsbereich gerichtet, dass innerhalb des Bearbeitungsbereichs ein nicht von dem Laserstrahl bzw. den Laserstrahlen bestrahlter freier Bereich vorhanden ist, durch den eine abschattungsfreie Zuführung ermöglicht wird. Bevorzugt erfolgt die Zufuhr des Zusatzwerkstoffs unmittelbar in den freien Bereich. Hierdurch kann gleichzeitig eine Bearbeitung des Werkstücks mittels in der Intensität einstellbarer Laserstrahlung und Zusatzwerkstoff erfolgen.

Vorteilhaft sind die mehreren Strahlungsquellen und bzw. oder die Laserstrahlen ringförmig um die Einrichtung zum Zuführen von Zusatzwerkstoff angeordnet, so dass eine gleichmäßige Beaufschlagung des Zusatzwerkstoffs mit Laserstrahlung möglich ist. Vorzugsweise sind die Strahlungsquellen und bzw. oder die Laserstrahlen in mindestens zwei Ringen angeordnet, die besonders vorzugsweise konzentrisch sind. Es kann vorgesehen sein, dass der Zusatzwerkstoff durch den Mittelpunkt dieser konzentrischen Ringe geführt ist.

Bei einem Einsatz mehrerer Strahlungsquellen können diese derartig angeordnet sein, dass die von den Strahlungsquellen emittierten Laserstrahlen sich in einem einzigen Schnittbereich oder Schnittpunkt kreuzen. Durch diesen Schnittbereich wird vorzugsweise auch der Zusatzwerkstoff geführt, so dass nur im Schnittbereich, der beispielsweise im Bearbeitungsbereich liegen kann, eine Erwärmung des Zusatzwerkstoffs stattfindet, während in Bereichen oberhalb und unterhalb dieses Schnittbereichs keine Erwärmung stattfindet.

Zum Ausbilden eines ringförmigen Strahlungsfelds des Laserstrahls kann mindestens ein Axicon oder ein anderes optisches Element, das einen punktförmigen Strahl in einen ringförmigen Strahl wandelt, im Strahlengang mindestens eines Laserstrahls angeordnet sein. Das optische Element kann hierbei eine spezielle konisch geschliffene Linse oder ein Prisma, eine Kegellinse oder ein Hohlkegel sein oder mit torischen Flächen versehen sein. Außerdem kann das optische Element als diffraktives Element, refraktives Element oder als eine Hybridstruktur aus dem diffraktiven Element und dem refraktiven Element aufgebaut sein. Zum Formen der Strahlgeometrie und zum Anpassen der Intensitätsverteilung kann das beschriebene optische Element bzw. das Axicon mit weiteren Axicons, Kollimationslinsen, Fokussierlinsen oder anderen optischen Elementen kombiniert werden. Bevorzugt ist hierbei in dem nicht vom Laserstrahl bestrahlten freien Bereich des ringförmigen Strahlungsfelds die Einrichtung zum Zuführen des Zusatzwerkstoffs angeordnet.

Das Element zum lokalen Beeinflussen der Intensität des Laserstrahls kann ein Polarisator, ein Polarisatorenpaar mit jeweils unterschiedlicher Polarisationsachse, ein Farbfilter, eine Blende, eine Strahlfalle oder ein Shutter sein. Es können natürlich auch Kombinationen der genannten Bauteile im Strahlengang eines oder mehrerer der Laserstrahlen angeordnet sein.

Die Strahlungsquelle ist typischerweise ein Diodenlaser, ein Faserlaser, ein Festkörperlaser, ein Excimerlaser, ein CO₂-basierter Laser oder ein anderer gasbasierter Lasertyp. Es können auch bei Verwendung mehrerer Strahlungsquellen verschiedene Lasertypen in Kombination miteinander verwendet werden. Die mindestens eine Strahlungsquelle kann vorzugsweise im Dauerstrichbetrieb, im Quasidauerstrichbetrieb oder im Pulsbetrieb betrieben werden. Vorzugsweise ist die Strahlungsquelle als ein Diodenlaser ausgebildet, da dieser Lasertyp eine kompakte Bauform bei der gewünschten Leistung aufweist, wobei besonders vorzugsweise die Strahlungsquelle als Diodenlaserstacks, Diodenlaserbarren oder Single-Emitter-Laser vorliegt.

Vorzugsweise ist die Strahlungsquelle eine Diodenlaserstrahlungsquelle, die ohne Faserkopplung direkt auf die Werkstückoberfläche strahlt, um eine möglichst hohe Intensität auf der Werkstückoberfläche zu erhalten.

Diese direkt strahlende Diodenlaserstrahlungsquelle kann derart aufgebaut sein, dass mehrere einzelne Strahlungsquellen ringförmig um die optische Achse angeordnet sind, so dass sich entlang der optischen Achse ein Freiraum ergibt. Dieser Freiraum kann für ein Zuführen des Zusatzwerkstoffs oder eines Gases genutzt werden. Alternativ oder zusätzlich kann in dem Freiraum auch eine Vorrichtung zur Prozessbeobachtung während der Oberflächenbearbeitung im Bearbeitungsbereich angeordnet sein.

Es kann vorgesehen sein, dass der Laserstrahl, bzw. insbesondere bei der zuvor beschriebenen Laserstrahlungsquelle die Laserstrahlen, durch eine Fokussierlinse oder mindestens einen Spiegel auf dem Bearbeitungsbereich gebündelt werden. Der Spiegel kann hierzu teildurchlässig sein, außerdem können auch mehrere teildurchlässige Spiegel hintereinander angeordnet sein, um die gewünschte Intensitätsverteilung zu erreichen.

Die einzelnen Strahlungsquellen und bzw. oder die Laserstrahlen sind typischerweise in mindestens zwei Sektoren um die optische Achse angeordnet, wobei sich eine Struktur der Anordnung in einem regelmäßigen oder unregelmäßigen Winkelverhältnis wiederholen kann.

Außerdem können diese Sektoren so angeordnet sein, dass sich eine langsame Diodenlaserpropagationsrichtung (auch als "slow axis" bezeichnet) zwischen mindestens zwei der Sektoren, vorzugsweise zwischen allen Sektoren unterscheidet. Die Diodenlaserstrahlungsquelle liegt besonders vorzugsweise in Form eines Laserstabs (auch als "Laserstack" bekannt) vor. Typischerweise sind hierbei die langsame Diodenlaserpropagationsrichtungen einzelner den Laserstab bildender Diodenlaserstrahlungsquellen so ausgerichtet, dass sie parallel zu der langsame Diodenlaserpropagationsrichtung des gesamten Laserstabs verlaufen. Der Laserstab selbst sollte weniger als zehn einzelne Diodenlaserstrahlungsquellen aufweisen.

Außerdem kann vorgesehen sein, dass die von den einzelnen Strahlungsquellen in den verschiedenen Sektoren emittierten Laserstrahlen mittels Wellenlängenmultiplexing, Polarisationsmultiplexing oder Strahlüberlagerung (räumlichem Multiplexing) überlagert werden.

Vorzugsweise sind die Strahlungsquelle oder die Strahlungsquellen und bzw. oder das mindestens eine Element innerhalb eines Gehäuses angeordnet. Das Gehäuse kann aus Metall ausgebildet sein, es kann aber auch ein Kunststoffgehäuse verwendet werden. Typischerweise sind alle zum Emittieren oder Beeinflussen des Laserstrahls oder der Laserstrahlen benötigen Komponenten innerhalb des Gehäuses angeordnet.

Ein erfindungsgemäßes Verfahren ist im Anspruch 14 offenbart.

Es kann vorgesehen sein, dass die von mehreren Strahlungsquellen emittierten Laserstrahlen als einzelne Laserstrahlen auf bzw. in den Bearbeitungsbereich gerichtet werden und mindestens einer der Laserstrahlen eine von den weiteren Laserstrahlen abweichende Brennweite aufweist, die durch ein im Strahlengang dieses Laserstrahls angeordnetes und entlang des Strahlengangs verschiebbares refraktives oder diffraktives optisches Element eingestellt wird. Durch die Verschiebbarkeit kann einfach und schnell eine Anpassung der Brennweite und somit auch der Leistungsdichte im Bearbeitungsbereich erreicht werden.

Alternativ oder zusätzlich kann mindestens einer der Laserstrahlen durch ein gegenüber der optischen Achse unter einem von 90° abweichenden Winkel angeordnetes diffraktives oder refraktives optisches Element und bzw. oder eine Blende mit einem in seiner Form von den übrigen Laserstrahlen unterschiedlichen Strahlquerschnitt ausgebildet werden. Das diffraktive oder refraktive optische Element kann hierbei auch um eine senkrecht in Bezug auf die optische Achse stehende Drehachse gedreht werden, um somit den Strahlquerschnitt des Laserstrahls in seiner Form zu verändern.

Vorteilhaft kann mindestens einer der von den Strahlungsquellen emittierten Laserstrahlen in seiner Leistung variiert werden, um verschiedene Intensitäten innerhalb des Bearbeitungsbereichs erreichen zu können. Vorzugsweise werden mehrere der Laserstrahlen nacheinander oder zeitgleich in ihrer jeweiligen Leistung variiert oder ausgeschaltet.

Eine Temperatur des Bearbeitungsbereichs kann durch ein Temperaturmesssystem, das vorzugsweise einen optischen Infrarotsensor, einen pyrometrischen Sensor und bzw. oder einen thermografischen Sensor umfasst und bzw. oder als bildgebendes thermografisches System ausgebildet ist, überwacht werden. Typischerweise erfolgt eine Regelung der Intensität des Laserstrahls bzw. der Laserstrahlen durch eine Steuereinheit anhand der Messwerte des Temperaturmesssystems. Hierdurch wird stets ein gewünschtes Temperaturprofil auf dem Bearbeitungsbereich erreicht.

Das beschriebene Verfahren ist mit der bereits beschriebenen Vorrichtung durchführbar, die Vorrichtung ist also zum Durchführen des Verfahrens eingerichtet.

Das beschriebene Verfahren und die beschriebene Vorrichtung können zum additiven Fertigen, Schneiden, Schweißen, Löten, Härten, Oberflächenstrukturieren, Verändern von Stoffeigenschaften und bzw. oder Beschichten eingesetzt werden.

Ausführungsbeispiele der Erfindung sind in den Zeichnungen dargestellt und werden nachfolgend anhand der Figuren 1 bis 29 erläutert.

Es zeigen:
- Fig. 1: eine seitliche schematische Ansicht einer Vorrichtung zur thermischen Bearbeitung, die keine Ausführungsform der Erfindung darstellt;
- Fig. 2: eine Figur 1 entsprechende Ansicht mit mehreren getrennt voneinander ansteuerbaren Strahlungsquellen;
- Fig. 3: eine Figur 2 entsprechende Ansicht mit einem Element zum Einstellen der Brennweite in einem Strahlengang;
- Fig. 4: zwei Laserstrahlen mit Strahlquerschnitten unterschiedlicher Form;
- Fig. 5: eine Figur 3 entsprechende Ansicht mit einem optischen Element zum Beeinflussen des Strahlquerschnitts;
- Fig. 6: eine Fig. 1 entsprechende Ansicht der Vorrichtung mit zusätzlicher Vorrichtung zum Zuführen von Zusatzwerkstoff;
- Fig. 7: eine seitliche Ansicht der Laserstrahlungsquelle und des emittierten Laserstrahls;
- Fig. 8: eine Figur 4 entsprechende Ansicht mehrerer, von ringförmig angeordneten Strahlungsquellen emittierten Laserstrahlen;
- Fig. 9: eine Figur 8 entsprechende Ansicht mit einzelnen ausgeblendeten Laserstrahlen;
- Fig. 10: eine Figur 9 entsprechende Ansicht der überlagerten Laserstrahlen in der Brennebene;
- Fig. 11: einen schematischen Aufbau der ringförmig angeordneten Laserstrahlungsquellen;
- Fig. 12: eine Figur 7 entsprechende Ansicht mit zwei Axicons;
- Fig. 13: eine Figur 8 entsprechende Ansicht des Laserstrahls mit zwei Blenden;
- Fig. 14: eine Fig. 9 entsprechende Darstellung des durch die in Fig. 13 gezeigte Anordnung erhaltenen Strahlungsfelds;
- Fig. 15: eine Figur 10 entsprechende Darstellung des in Figur 14 gezeigten Laserstrahls in der Brennebene;
- Fig. 16: eine Figur 7 entsprechende Ansicht mit mehreren Fasern;
- Fig. 17: eine Figur 8 entsprechende Ansicht ringförmig verlaufender Laserstrahlen;
- Fig. 18: eine Figur 17 entsprechende Ansicht mit sich teilweise überlappenden Laserstrahlen;
- Fig. 19: eine Figur 18 entsprechende Ansicht mit teilweise ausgeblendeten Laserstrahlen;
- Fig. 20: eine Figur 10 entsprechende Ansicht von in der Brennebene überlagerten Laserstrahlen;
- Fig. 21: eine Fig. 1 entsprechende schematische seitliche Darstellung der Vorrichtung mit Gehäuse und Temperaturmesssystem;
- Fig. 22: eine Fig. 1 entsprechende schematische seitliche Darstellung, bei der jede der Strahlungsquellen eine einzelne Linse im Strahlengang der emittierten Laserstrahlung aufweist;
- Fig. 23: eine schematische Darstellung eines Industrieroboters mit Laserkopf;
- Fig. 24: eine schematische Darstellung eines Faserbündels mit gemeinsamer Kollimationsoptik;
- Fig. 25: eine schematische Darstellung von Strahlungsquellen unterschiedlicher Wellenlänge;
- Fig. 26: eine schematische Darstellung von Strahlungsquellen, die Laserstrahlung unterschiedlicher Polarisation emittieren;
- Fig. 27: eine Aufsicht auf eine Anordnung von Strahlungsquellen bzw. Laserstrahlen, die ungleichmäßig verteilt sind.
- Fig. 28: eine Figur 27 entsprechende Ansicht von Strahlungsquellen bzw. Laserstrahlen, die auf mehreren, nicht konzentrischen Kreisen angeordnet sind; und
- Fig. 29: eine Figur 27 entsprechende Ansicht von Strahlungsquellen bzw. Laserstrahlen, die jeweils auf Kreisen unterschiedlicher Durchmesser angeordnet sind.

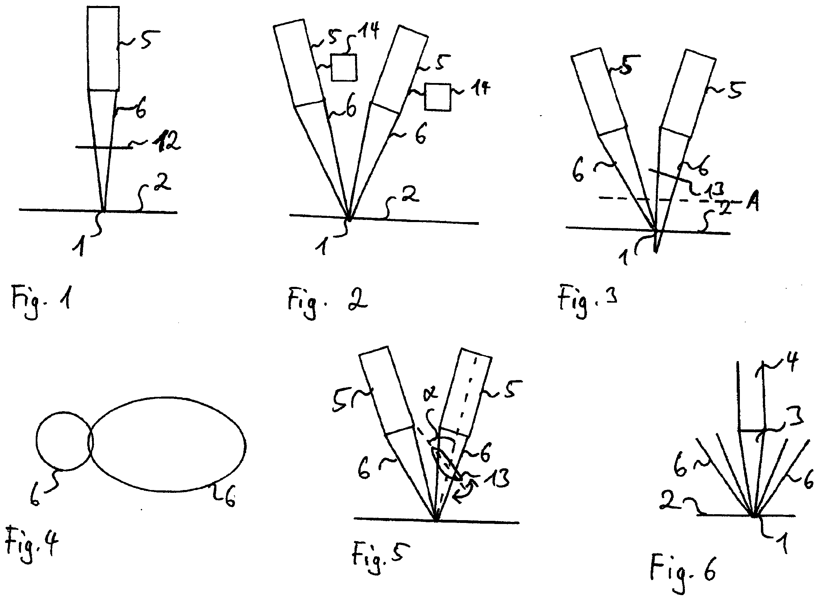

Figur 1 zeigt in einer schematischen seitlichen Ansicht eine Strahlungsquelle 5, die auf einen Bearbeitungsbereich 1, der auf einer Werkstückoberfläche 2 liegt, einen Laserstrahl 6 emittiert. Der Laserstrahl 6 ist im dargestellten Ausführungsbeispiel bereits bei Verlassen der Strahlungsquelle 5 auf die Werkstückoberfläche 2 fokussiert, benötigt also keine weiteren im Strahlengang außerhalb der Strahlungsquelle 5 angeordneten optischen Elemente. Zum Einstellen einer Intensität des Laserstrahls 6 befindet sich in dessen Strahlengang ein in seiner Filterwirkung einstellbarer optischer Filter 12 als intensitätsreduzierendes Element. In weiteren Ausführungsbeispielen kann statt des optischen Filters 12 oder zusätzlich dazu jedoch auch ein Polarisator, ein Polarisatorenpaar mit jeweils unterschiedlicher Polarisationsachse, eine Blende, eine Strahlfalle die den Laserstrahl 6 typischerweise teilweise abschattet, oder ein bevorzugt rotierender Shutter angeordnet sein. Die gezeigte Vorrichtung kann zum Trennen, Schweißen oder zum Ändern von Stoffeigenschaften mittels Laserstrahlung genutzt werden.

In Figur 2 ist in einer Figur 1 entsprechenden seitlichen Ansicht ein Aufbau dargestellt, in dem zwei Strahlungsquellen 5 verwendet werden, die jeweils einen einzelnen Laserstrahl 6 emittieren. Wiederkehrende Merkmale sind in dieser Figur, wie auch in den folgenden Figuren, mit identischen Bezugszeichen versehen. Die Laserstrahlen 6 treffen als einzelne Laserstrahlen 6 unter verschiedenen Winkeln im Bearbeitungsbereich lauf die Werkstückoberfläche 2 auf. Sie sind jedoch beide so ausgerichtet, dass der Brennpunkt jeweils auf der Werkstückoberfläche 2 liegt. Dies heißt, dass beide Laserstrahlen 6 sich nur im Brennpunkt treffen oder überlagern. Die beiden Strahlungsquellen 5 sind jeweils getrennt und unabhängig voneinander von jeweils einer Steuereinheit 14 ansteuerbar. Es kann jedoch auch nur eine einzige Steuereinheit 14 zum separaten Ansteuern der Strahlungsquellen 5 verwendet werden. Dies geschieht im dargestellten Ausführungsbeispiel über veränderbare elektrische Widerstände, die unterschiedliche große elektrische Ströme oder Spannungen für die Strahlungsquellen 5 erlauben und die ebenfalls von der Steuereinheit 14 angesteuert bzw. geregelt werden. Entsprechend dem zugeführten elektrischen Strom oder Spannung ändert sich auch die ausgegebene Leistung des jeweiligen Laserstrahls 6. Durch die Überlagerung der Laserstrahlen 6 auf der Werkstückoberfläche 2 lässt sich im Bearbeitungsbereich 1 eine lokal definierte Intensitätsverteilung erreichen, die auch eine entsprechend ähnliche Temperaturverteilung nach sich zieht und somit auf die Erfordernisse der jeweils gewünschten Werkstoffbearbeitung eingestellt werden kann. Es kann so eine vorteilhafte Temperaturverteilung in Bezug zur Vorschubachsrichtung erreicht werden.

Werden mehrere Strahlungsquellen 5 verwendet und separat angesteuert, kann zu einem Zeitpunkt eine der Strahlungsquellen 5 jeweils einen Laserstrahl 6 mit größtmöglicher Leistung oder sogar keinen Laserstrahl emittieren. Dies kann durch einen Strombypass, eine entsprechende Widerstandseinstellung oder gesteuerte elektrische Stromquellen erreicht werden.

In Figur 3 ist in einer Figur 2 entsprechenden Ansicht wiederum eine Kombination von mehreren Strahlungsquellen 5 gezeigt, bei denen zumindest im Strahlengang einer der Strahlungsquellen 5 ein Element 13 zum Einstellen der Brennweite angeordnet ist. Dieses Element 13 ist im dargestellten Ausführungsbeispiel eine bikonvexe Linse. Es kann aber auch ein anderes diffraktives oder refraktives optisches Element Verwendung finden. Zudem ist einer der Laserstrahlen 6 nun nicht mehr auf die Werkstückoberfläche 2 fokussiert, sondern die Brennebene ist im Werkstückvolumen angeordnet. In weiteren Ausführungsbeispielen kann die Brennebene zumindest eines der Laserstrahlen 6 aber auch oberhalb der Werkstückoberfläche 2 oder unterhalb eines Werkstücks angeordnet sein.

Figur 4 zeigt den Strahlquerschnitt zweier Laserstrahlen 6 in einer Schnittebene oberhalb der Werkstückoberfläche 2, beispielsweise der in Figur 3 eingezeichneten Schnittebene A. Die beiden Laserstrahlen 6 sind auf die Werkstückoberfläche 2 fokussiert und überlagern sich nur im Bearbeitungsbereich 1. Eine Form der Strahlquerschnitte der Laserstrahlen 6 unterscheidet sich, um eine in diesem Fall räumlich elongierte Intensitätsverteilung auf der Werkstückoberfläche 2 innerhalb des Bearbeitungsbereichs 1 zu erhalten. Während einer der Strahlquerschnitte rund ist, ist ein weiterer elliptisch. In weiteren Ausführungsbeispielen können aber auch andere geometrische Formen verwendet werden.

Wie in Figur 5 dargestellt, kann die Form des Strahlquerschnitts zumindest eines der Laserstrahlen 6 durch ein optisches Element 13 beeinflusst werden, das im Strahlengang unter einem Winkel α angeordnet ist, der bezüglich der optischen Achse der Strahlungsquelle 5 einen von 90° verschiedenen Winkel aufweist. Das optische Element 13 ist hierzu um eine senkrecht in Bezug auf die optische Achse ausgerichtete Rotationsachse im Strahlengang drehbar, so dass verschiedene Strahlquerschnitte eingestellt werden können. Die Drehung, Neigung oder Verkippung des optischen Elements 13 kann beispielsweise mittels der Steuereinheit 14 und einem elektro-mechanischem Stellelement wie einem Motor oder einem Aktor, vorzugsweise einem Piezoaktor, erfolgen.

Das in Figur 6 gezeigte Ausführungsbeispiel stellt eine Vorrichtung zum thermischen Bearbeiten dar, bei dem die Laserstrahlen 6 nicht senkrecht auf die Werkstückoberfläche 2 auftreffen, zwischen den Strahlengängen der Laserstrahlen 6 aber eine Einrichtung 4 zum Zuführen von Zusatzwerkstoff 3 in oder auf den Bearbeitungsbereich 1 vorgesehen ist. Der Zusatzwerkstoff 3 und die Laserstrahlen 6 treffen nur im Bearbeitungsbereich 1 zusammen und werden getrennt dorthin geführt. Typischerweise sind die Strahlungsquellen 5 ringförmig um die Einrichtung 4 zum Zuführen von Zusatzwerkstoff 3 angeordnet. Es kann auch eine Anordnung der Strahlungsquellen 5 in mehreren konzentrischen Ringen vorgesehen sein, bei denen die Einrichtung 4 zum Zuführen von Zusatzwerkstoff 3 im Mittelpunkt der konzentrischen Ringe liegt. In weiteren Ausführungsbeispielen kann auch eine ringförmige Anordnung ohne die Einrichtung 4 zum Zuführen von Zusatzwerkstoff 3 verwendet werden.

Die Strahlungsquellen 5 weisen in dem gezeigten Ausführungsbeispiel alle eine einstellbare Laserausgangsleistung von maximal 200 W auf, in weiteren Ausführungsbeispielen können aber auch eine andere maximale Laserausgangsleistung oder Strahlungsquellen 5 mit einer festgelegten Laserausgangsleistung, also ohne die Möglichkeit einer Einstellung, verwendet werden. Ebenso ist es möglich, dass zumindest eine der verwendeten Strahlungsquellen 5 eine von den weiteren Strahlungsquellen 5 verschiedene Laserausgangsleistung aufweist. Es können unterschiedliche Strahlungsquellen 5 Laserstrahlen 6 unterschiedlicher Wellenlängen emittieren, d. h. dass mindestens eine der Strahlungsquellen 5 eine von den weiteren Strahlungsquellen 5 verschiedene Wellenlänge emittiert. Außerdem können die einzelnen Strahlungsquellen 5 Laser unterschiedlicher Typen wie Diodenlaser, Festkörperlaser, Excimerlaser, Gaslaser, Faserlaser oder andere Lasertypen sein.

Der Zusatzwerkstoff 3 wird in dem dargestellten Ausführungsbeispiel senkrecht auf die Werkstückoberfläche 2 bzw. den Bearbeitungsbereich 1 aufgebracht, während die Laserstrahlen 6 jeweils unter einem von 90° verschiedenen Winkel auf den Bearbeitungsbereich 1 auftreffen. Der Zusatzwerkstoff 3 liegt hierbei typischerweise in Pulverform vor, es können aber auch Suspensionen mit einer Flüssigkeit oder ein Draht bzw. Band verwendet werden.

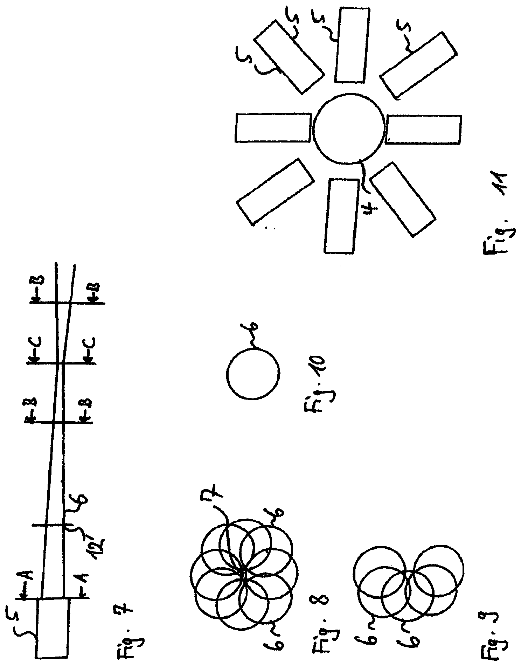

Figur 7 zeigt eine seitliche Ansicht von nebeneinander angeordneten Strahlungsquellen 5 sowie der emittierten Laserstrahlen 6. Zumindest einer der Laserstrahlen 6 ist ausgehend von der Strahlungsquelle 5 durch einen Shutter 12' geführt, der wechselnd geöffnet und geschlossen wird. In weiteren Ausführungsbeispielen kann statt des Shutters 12' auch eine Blende oder eine Strahlfalle verwendet werden.

Figur 8 zeigt einen Schnitt entlang der Schnittebene A in Figur 7. Die Laserstrahlen 6 überlappen einander teilweise und sind ringförmig angeordnet. In einem nicht von Laserstrahlung berührten Bereich 7 mittig innerhalb der Laserstrahlen 6 wird erfindungsgemäß auch der Zusatzwerkstoff 3 zugeführt.

Die Anzahl der Laserstrahlen 6 sowie die Anzahl der Strahlungsquellen 5 ist erfindungsgemäß ungerade, wobei eine Beschädigung einzelner Strahlungsquellen 5 aufgrund Rückreflexionen unwahrscheinlicher ist.

Einen Figur 8 entsprechenden Schnitt entlang der Schnittebene B in Figur 7 zeigt Figur 9. Dabei ist ein Teil der Laserstrahlen 6 durch den oder die Shutter 12 ausgeblendet. Nur in der Schnittebene C von Figur 7, d. h. der Brennebene, überlagern sich alle Laserstrahlen 6, wie in Figur 10 gezeigt. Indem einzelne Laserstrahlen 6 ausgeblendet werden, wird in der Brennebene sowie im Bearbeitungsbereich 1 eine definierte lokal adaptierte Intensitätsverteilung der Laserstrahlung erreicht. Erfindungsgemäß wird eine unsymmetrische Intensitätsverteilung der Laserstrahlung erreicht.

Figur 11 zeigt in Draufsicht die kreisförmig bzw. ringförmig angeordneten Strahlungsquellen 5, in deren Mitte die Einrichtung 4 zum Zuführen von Zusatzwerkstoff 3 angeordnet ist. Die Strahlungsquellen 5 sind im dargestellten Ausführungsbeispiel Diodenlaser, können aber auch Festkörperlaser oder Laser eines anderen Typs sein. Ebenso ist es möglich, dass nur ein Teil der Strahlungsquellen 5 als Diodenlaser ausgebildet ist, während die restlichen Strahlungsquellen 5 Laser eines anderen Typs, beispielsweise Festkörperlaser, sind. Prinzipiell sind beliebige Kombinationen von Lasern unterschiedlichen Typs möglich.

Die in Figur 11 gezeigten und als die Strahlungsquellen 5 dienenden Diodenlaser strahlen ohne Faserkopplung direkt auf die Werkstückoberfläche 2. Statt der Einrichtung 4 zum Zuführen von Zusatzwerkstoff 3 kann anstelle oder zusätzlich dazu auch eine Kamera oder eine andere Abbildungsvorrichtung zum Beobachten des durchgeführten Prozesses mittig zwischen den Strahlungsquellen 5 angeordnet sein.

In dem in Figur 11 gezeigten Ausführungsbeispiel sind die Strahlungsquellen 5 ringförmig in Sektoren angeordnet, wobei sich eine Richtung einer langsamen Achse, also einer langsamen Diodenlaserpropagationsrichtung, in einem ersten der Sektoren von der Richtung der langsamen Achse in einem zweiten der Sektoren unterscheidet. Außerdem können die von den einzelnen Strahlungsquellen in den verschiedenen Sektoren emittierten Laserstrahlen mittels Wellenlängenmultiplexing, Polarisationsmultiplexing oder Strahlüberlagerung einander überlagert werden.

In weiteren Ausführungsbeispielen können die Strahlungsquellen 5 auch als Laserstäbe vorliegen.

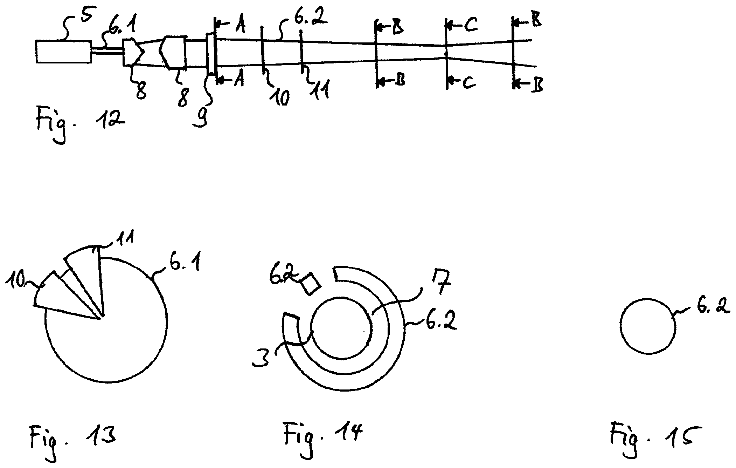

In Figur 12 ist eine Figur 7 entsprechende seitliche Ansicht eines weiteren Ausführungsbeispiels eines Strahlengangs der Laserstrahlung gezeigt. Die Strahlungsquelle 5 emittiert nun einen einzelnen Laserstrahl 6.1, der auf ein erstes Axicon 8 trifft und in einen ringförmigen Laserstrahl 6.2 mit einem strahlungsfreien Bereich 7 im Inneren transformiert wird. Durch ein zweites Axicon 8 und eine nachfolgend angeordnete Blende 9 wird der Laserstrahl 6.2 hinsichtlich der Form und Fläche des Strahlquerschnitts verändert. Die Blende 9 kann hierbei auch drehbar ausgestaltet sein. Wie in dem in Figur 13 dargestellten Schnitt entlang der Schnittebene A der Figur 12 kann durch weitere Blenden 10 und 11 die räumliche Verteilung der Laserstrahlung im Strahlengang weiter beeinflusst werden.

Es ist auch möglich, einen ringförmigen Laserstrahl 6 auszubilden und durch die Blenden 10 und 11 einzelne Bereiche davon auszublenden. Mittig in dem ringförmigen Laserstrahl 6.2 kann dann, wie in Figur 14 gezeigt, der Zusatzwerkstoff 3 geführt werden.

Figur 15 zeigt wiederum, dass nur in der Brennebene der durch das Axicon 8 beeinflusste Laserstrahl 6.2 zusammenläuft und sich anschließend wieder aufweitet.

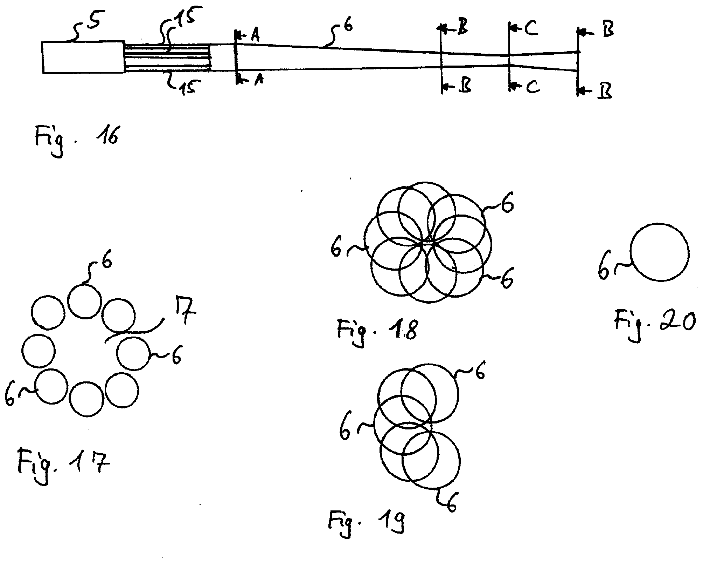

In Figur 16 ist ein weiteres Ausführungsbeispiel gezeigt, bei dem die Laserstrahlung durch mehrere Fasern 15 geleitet wird. Die Fasern 15 sind ringförmig angeordnet und mittig zwischen den Fasern befindet sich der Bereich 7, in den keine Laserstrahlung gelangt.

Ein Querschnitt entlang der Schnittebene A in Figur 16 ist dementsprechend in Figur 17 zu sehen. Hierbei überlagern sich die Laserstrahlen 6 nicht. Figur 18 zeigt, wie bei weiterer Annährung an die Brennebene die Laserstrahlen 6 einander überlappen. Das in dieser Figur gezeigte Muster der Strahlquerschnitte ist in der Schnittebene B der Figur 16 erhalten.

In weiteren Ausführungsbeispielen können auch in dem in Figur 16 gezeigten Ausführungsbeispielen einzelne Fasern durch Blenden oder andere strahlblockierende oder vernichtende Elemente vollständig geblockt werden, so dass sich das in Figur 19 gezeigte Muster der Strahlquerschnitte ergibt. In Figur 20 ist wiederum gezeigt, dass sich die Laserstrahlen 6 lediglich in der Brennebene, die der Schnittebene C in Figur 16 entspricht, vollständig überlagern.

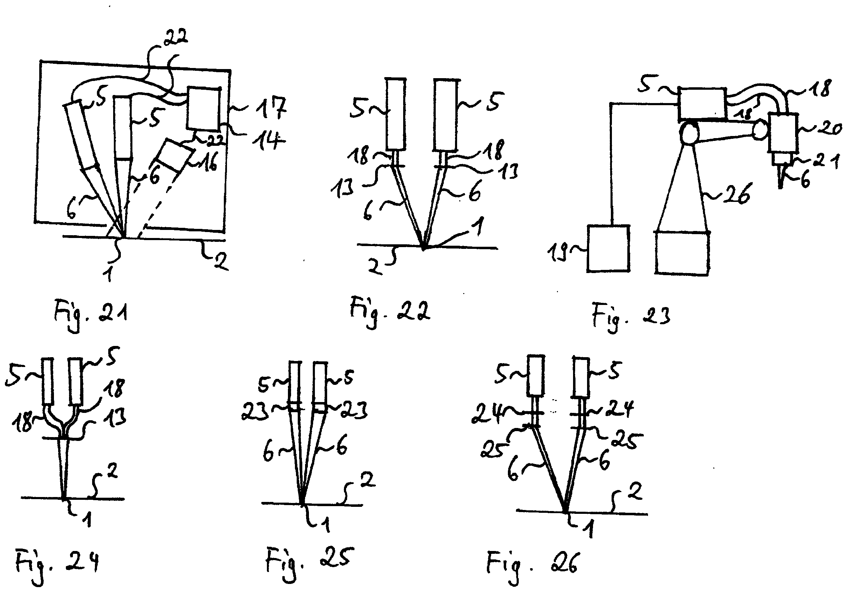

Figur 21 zeigt in einer schematischen seitlichen Ansicht ein Ausführungsbeispiel der Erfindung, bei der zwei Laserstrahlungsquellen 5 zusammen mit der Steuereinheit 14 und einem Temperaturmesssystem 16 in einem Gehäuse 17 oberhalb des Bearbeitungsbereichs 1 angeordnet sind. Das Gehäuse 17 weist eine Öffnung auf, durch die die Laserstrahlen 6 auf den Bearbeitungsbereich 1 treffen. Der Bearbeitungsbereich 1 wird durch das Temperaturmesssystem 16 hinsichtlich einer Temperaturverteilung überwacht. Das Temperaturmesssystem 16 ist hierzu als zweidimensional messender Infrarotsensor ausgebildet, der seine Messwerte an die Steuereinheit 14 über ein Kabel 22 übermittelt.

Über weitere Kabel 22 werden die Strahlungsquellen 5 in ihrer Intensität von der Recheneinheit 14 gesteuert bzw. geregelt, so dass stets das geforderte Temperaturprofil im Bearbeitungsbereich vorliegt. In weiteren Ausführungsformen können auch weitere Bauelemente oder Baugruppen, die zum Betrieb der Strahlungsquellen 5 oder zum Beeinflussen der optischen Eigenschaften der Laserstrahlen 6 nötig sind, in dem Gehäuse 17 angeordnet sein. Außerdem ist es möglich, dass die Steuereinheit 14 auch einzelne optische Elemente 10, 11, 12 oder Linsen 13, die im Strahlengang der Laserstrahlen 6 angeordnet sind, ansteuert, um die Intensität der Laserstrahlen 6 im Bearbeitungsbereich 1 zu beeinflussen.

In Figur 22 ist ein Ausführungsbeispiel gezeigt, bei dem ein Element 13 in Form einer konvexen Linse im Strahlengang jedes der Laserstrahlen 6 angeordnet ist. Jeder Strahlungsquelle 5 nachgelagert ist in diesem Ausführungsbeispiel eine Lichtleitfaser 18, durch die die emittierte Laserstrahlung auf das optische Element 13 gelangt und von dort auf den Bearbeitungsbereich 1 fokussiert wird. Jedes der optischen Elemente 13 ist dabei einzeln verstellbar, d. h. insbesondere unabhängig von anderen optischen Elementen verstellbar, beispielsweise in drei Translationsachsen verschiebbar und bzw. oder um drei Rotationsachsen drehbar. Auch wenn in Figur 22 nur ein einzelnes optisches Element 13 dargestellt ist, so kann dieses optische Elemente 13 mehrere Komponenten aufweisen, beispielsweise eine Kombination aus mindestens einem Kollimator und mindestens einer Fokuslinse zur Manipulation und Formung des Laserspots, so dass beliebige Formen des Laserspots wie Linie oder Ellipse, insbesondere Kreis, einstellbar sind. Dies ermöglicht maximale Flexibilität bei minimalen Abbildungsfehlern. Ebenso können die optischen Elemente 13 der einzelnen Strahlungsquellen 5 identisch aufgebaut sein oder zumindest einmal paarweise verschieden sein. Wie in Figur 24 dargestellt, können auch zumindest zwei der Lichtleitfasern 18 als lichtleitende Transportfasern zu einem Faserbündel zusammengefasst sein, das eine gemeinsame Kollimationslinse 13 als Kollimationsoptik aufweist. Hierzu liegen die Lichtleitfasern typischerweise unmittelbar aneinander an, sind also in direktem berührendem Kontakt. Alternativ kann ein Abstand zwischen den Lichtleitfasern 18 vorgesehen sein, der maximal dem Faserdurchmesser einer der Lichtleitfasern 18 entspricht. Eine Anordnung der Fasern kann hierbei derart ausgestaltet sein, dass um eine mittlere Lichtleitfaser 18 insgesamt sechs weitere Lichtleitfasern 18 gruppiert sind. Alternativ kann der Platz der mittleren Leichtleitfaser 18 auch frei bleiben.

Durch die Verwendung von Faserbündeln kann die auf den Bearbeitungsbereich 1 aufgebrachte Laserleistung einfach skaliert werden. Sind als Strahlungsquellen 5 beispielsweise sechs Lasermodule vorgesehen, deren emittierte Laserstrahlung durch ein Faserbündel geführt wird, so kann durch einen Einbau weiterer sechs Lasermodule und eines weiteren Faserbündels die Leistung skaliert werden.

Ein Industrieroboter 26, d. h. ein Roboter, dessen Tragarm sechs Freiheitsgrade aufweist, ist in Figur 23 dargestellt. Eine Stromquelle 19 versorgt die an dem Tragarm angebrachte Strahlungsquelle 5, die Laserstrahlung emittiert. Die emittierte Laserstrahlung wird über ein Bündel von Lichtleitfasern 18 an den Laserkopf 20 geführt. Am Laserkopf 20 ist ein Wechselkopf 21 mittels eines Bajonettverschlusses angebracht. Der Wechselkopf 21 enthält optische Bauelemente zum Einstellen der Brennweite bzw. der Intensität der Laserstrahlung oder allgemeiner eine Strahlformungsoptik und kann bei Bedarf gewechselt werden, so dass ein flexibles System entsteht. Durch die Verwendung der Lichtleitfasern 18 kann sowohl eine räumlich benachbarte als auch eine räumlich getrennte Anordnung der Strahlungsquelle 5 und der Strahlformungsoptik innerhalb oder außerhalb des Gehäuses 17 erreicht werden.

Die Anordnung der Lichtleitfasern 18 in Faserbündeln erlaubt eine Leistungssteigerung und gleichzeitig eine Anpassung eines Brennfleckdurchmessers bzw. Fokusdurchmessers. Eine Leistungselektronik zum adaptiven Ansteuern einzelner Strahlungsquellen 5 kann sowohl in der Stromquelle 19 als auch im Laserkopf 20 angeordnet sein.

In Figur 25 ist wiederum in einer schematischen seitlichen Ansicht eine Ausführung der Erfindung gezeigt, bei dem die Strahlungsquellen 5 Laserstrahlen 6 unterschiedlicher Wellenlängen emittieren. Die dargestellten Strahlungsquellen 5 sind einander gegenüberliegende angeordnet und zum Schutz vor Rückreflexionen von der Werkstückoberfläche 2 jeweils mit einem Wellenlängenfilter 23 versehen, der nur für die von der jeweiligen Strahlungsquelle 5 emittierte Wellenlänge der Laserstrahlung transmittierend ist, für weitere Wellenlängen aber reflektierend oder absorbierend. Die dargestellten Wellenlängenfilter sind daher in ihren Eigenschaften unterschiedlich, da typischerweise jeder dieser Wellenlängenfilter sensitiv für eine andere Wellenlänge ist.

Bei dem in Figur 26 abgebildeten Ausführungsbeispiel emittieren die Strahlungsquellen 5 jeweils linear polarisierte Laserstrahlung 6 bzw. unpolarisierte Laserstrahlung, die vor dem Auftreffen auf die Werkstückoberfläche 2 einen Polarisator durchläuft. Um Rückreflexe zu vermeiden ist, eine optische Diode aus einem Polarisationsfilter 24 und einem Zirkularpolaristor 25 zwischen jeder der Strahlungsquellen 5 und der Werkstückoberfläche 2 vorgesehen. Die optischen Dioden können jeweils identisch aufgebaut sein, es kann aber auch zumindest eine der optischen Dioden eine von den weiteren optischen Dioden verschiedenen Aufbau haben.

Bei Verwenden von zirkular polarisierter Laserstrahlung 6 weist die optische Diode typischerweise den Polarisationsfilter 24 zum Aufteilen der zirkular polarisierter Laserstrahlung 6 in ihre linear polarisierte Bestandteile und einen Faraday-Rotator und einen Polarisationsfilter 24 zum Vereinigen der linear polarisierten Bestandteile auf.

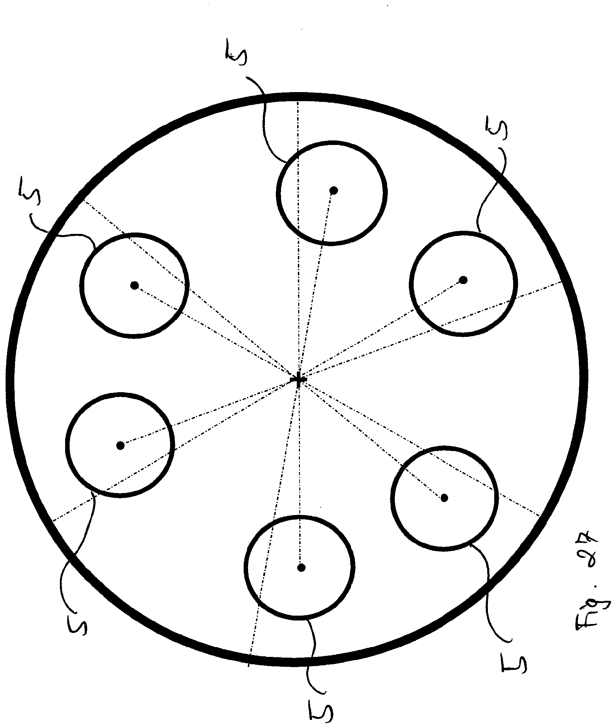

Figur 27 zeigt eine Aufsicht auf eine Anordnung von mehreren Strahlungsquellen 5, beispielsweise Lasermodule oder Ausgänge der Lichtleitfasern 18, bzw. mehreren Laserstrahlen 6, die ungleichmäßig auf einem Kreis verteilt sind. Die Strahlungsquellen 5 bzw. Laserstrahlen 6 sind auf einem Kreis einzigen Kreis angeordnet, jedoch auf dem Durchmesser des Kreises nicht gleichmäßig beabstandet, sondern jeweils mit einem Winkelversatz angeordnet, so dass keine der Strahlungsquellen 5 bzw. keiner der Laserstrahlen 6 genau einer anderen Strahlungsquelle 5 bzw. einem anderen Laserstrahl 6 gegenüberliegt.

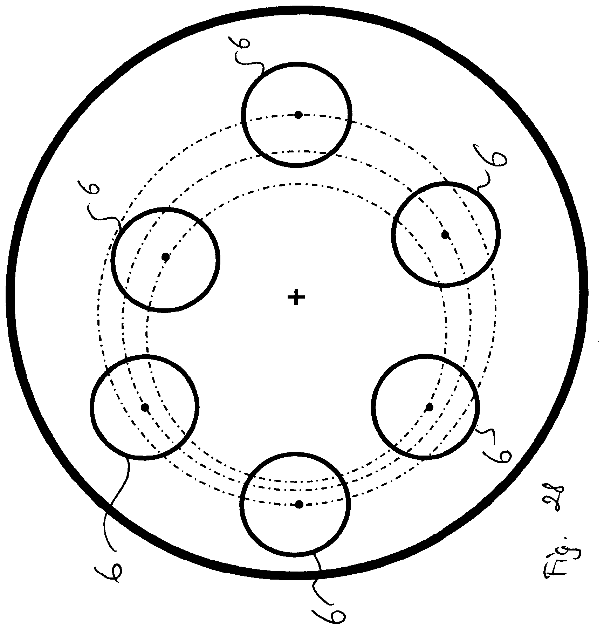

In Figur 28 ist in einer Figur 27 entsprechenden Ansicht der mehreren Strahlungsquellen 5 bzw. Laserstrahlen 6 eine Anordnung wiedergegeben, bei der auf insgesamt drei, nicht konzentrischen Kreisen die Strahlungsquellen 5 bzw. Laserstrahlen 6 verteilt sind. Jeweils zwei der Strahlungsquellen 5 oder der Laserstrahlen 6 sind hierbei auf einem Kreis angeordnet.

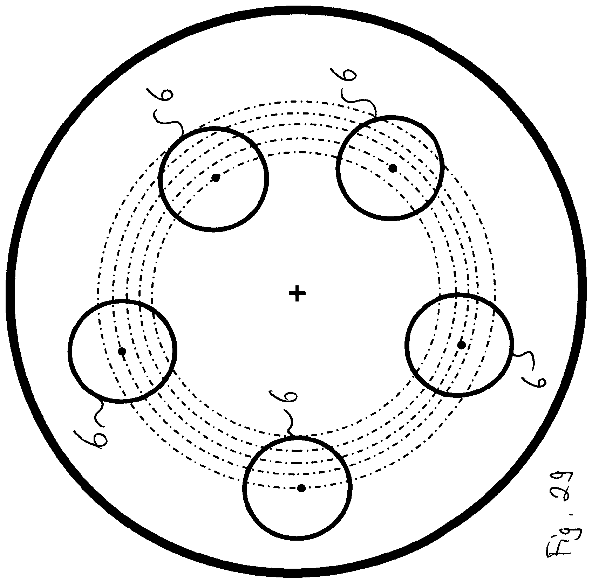

Eine entsprechende Anordnung von fünf Strahlungsquellen 5 bzw. Laserstrahlen 6, bei denen jede Strahlungsquelle 5 bzw. jeder Laserstrahl 6 auf einem Kreis mit einem anderen Durchmesser gegenüber der gemeinsamen Mittelachse bzw. dem gemeinsamen Mittelpunkt angeordnet ist, ist in Figur 29 in einer Figur 27 entsprechenden Ansicht dargestellt.

Jegliche in den Ausführungsbeispielen offenbarten Merkmale der verschiedenen Ausführungsformen können miteinander kombiniert und einzeln beansprucht werden.

## Patentansprüche

1. Vorrichtung zur thermischen Bearbeitung innerhalb eines Bearbeitungsbereichs (1) an einer Werkstückoberfläche (2) mittels von mehreren Strahlungsquellen (5) emittierten Laserstrahlen (6), mit einer Steuereinheit (14), die dazu ausgebildet ist, die Intensität mindestens eines der Laserstrahlen (6) innerhalb des Bearbeitungsbereichs (1) lokal definiert durch eine definierte Ansteuerung mehrerer der Strahlungsquellen (5) zu verändern, so dass innerhalb des Bearbeitungsbereichs (1) eine lokal definierte Verteilung der Intensität der auf die Werkstückoberfläche (2) auftreffenden Laserstrahlen (6) erreichbar ist, **dadurch gekennzeichnet, dass** eine ungerade Anzahl von mehreren Strahlungsquellen (5) und Laserstrahlen (6) vorliegt und/oder eine Anordnung von mehreren Strahlungsquellen (5) und Laserstrahlen (6) in einer unsymmetrischen Anordnung vorliegt und wobei die einander gegenüberliegende Strahlungsquellen (5) Laserstrahlen (6) unterschiedlicher Wellenlänge emittieren und eine Einrichtung (4) zum Zuführen von Zusatzwerkstoff (3) auf/in den Bearbeitungsbereich (1) vorhanden ist und die emittierten Laserstrahlen (6) so auf/in den Bearbeitungsbereich (1) gerichtet sind, dass innerhalb des Bearbeitungsbereichs (1) ein nicht von Laserstrahlen (6) bestrahlter freier Bereich (7) vorhanden ist, wobei die Zufuhr des Zusatzwerkstoffs (3) in den freien Bereich (7) erfolgt.

2. Vorrichtung nach Anspruch 1, **dadurch gekennzeichnet, dass** die von mehreren Strahlungsquellen (5) emittierten Laserstrahlen (6) als einzelne Laserstrahlen (6) auf den Bearbeitungsbereich (1) gerichtet sind und/oder
dass die mehreren Strahlungsquellen (5) und/oder die Laserstrahlen (6) ringförmig angeordnet sind.

3. Vorrichtung nach Anspruch 2, **dadurch gekennzeichnet, dass** die mehreren Strahlungsquellen (5) und/oder die Laserstrahlen (6) in mindestens zwei Ringen angeordnet sind, wobei die Ringe vorzugsweise konzentrisch sind.

4. Vorrichtung nach einem der Ansprüche 2 oder 3, **dadurch gekennzeichnet, dass** mindestens einer der Laserstrahlen (6) mit einer von den weiteren Laserstrahlen (6) abweichenden Brennweite auf/in den Bearbeitungsbereich (1) gerichtet ist, wobei vorzugsweise die Brennweite eines der Laserstrahlen (6) mit einem refraktiven oder diffraktiven optischen Element (13) beeinflussbar ist, und wobei besonders vorzugsweise die Brennweite jedes der Laserstrahlen (6) durch ein der den jeweiligen Laserstrahl emittierenden Strahlungsquelle (5) zugeordnetes refraktives oder diffraktives optisches Element beeinflussbar ist.

5. Vorrichtung nach einem der Ansprüche 2 bis 4, **dadurch gekennzeichnet, dass** mindestens einer der Laserstrahlen (6) mit einer von den übrigen Laserstrahlen (6) unterschiedlichen Leistung in den Bearbeitungsbereich (1) gerichtet ist und/oder mindestens einer der Laserstrahlen (6) einen in seiner Form von den übrigen Laserstrahlen (6) unterschiedlichen Strahlquerschnitt aufweist.

6. Vorrichtung nach Anspruch 5, **dadurch gekennzeichnet, dass** der Strahlquerschnitt durch ein gegenüber der optischen Achse unter einem von 90° abweichenden Winkel angeordnetes diffraktives oder refraktives optisches Element (13) und/oder eine Blende in seiner Form beeinflusst ist.

7. Vorrichtung nach einem der Ansprüche 4 bis 6, **dadurch gekennzeichnet, dass** das diffraktive oder refraktive optische Element (13) durch ein elektro-mechanisches Stellelement beweglich ist.

8. Vorrichtung nach einem der vorhergehenden Ansprüche, **dadurch gekennzeichnet, dass** mehrere Strahlungsquellen (5) jeweils mit lichtleitenden Fasern (18) versehen sind und vorzugsweise mindestens zwei der lichtleitenden Fasern (18) zu einem Faserbündel zusammengefasst sind, bei dem die lichtleitenden Fasern besonders vorzugsweise so dicht aneinander liegen, dass eine Kollimationsoptik für das Faserbündel genutzt werden kann und/oder die mehreren Strahlungsquellen (5) unabhängig voneinander durch den jeweiligen Strahlungsquellen (5) zugeordnete regelbare elektrische Widerstände und/oder durch den jeweiligen Strahlungsquellen (5) zugeordnete elektrische oder elektronische Bypassschaltungen ansteuerbar sind und/oder die jeweilige Strahlungsquelle (5) jeweils einzeln von einer steuerbaren oder regelbaren elektronischen Stromquelle betreibbar und einzeln abschaltbar ist.

9. Vorrichtung nach einem der vorhergehenden Ansprüche, **dadurch gekennzeichnet, dass** mehrere Strahlungsquellen (5) jeweils einen Laserstrahl (6) emittieren, wobei wenigstens einer der Laserstrahlen (6) eine von den übrigen Laserstrahlen verschiedene Polarisation aufweist und/oder mindestens eine der Strahlungsquellen (5) eine optische Diode aufweist.

10. Vorrichtung nach Anspruch 9, **dadurch gekennzeichnet, dass** mindestens eine der Strahlungsquellen (5) einen Wellenlängenfilter aufweist, der nur für die von der jeweiligen Strahlungsquelle emittierte Wellenlänge des Laserstrahls (6) transmissiv ist.

11. Vorrichtung nach Anspruch 9, **dadurch gekennzeichnet, dass** die optische Diode einen Polarisationsfilter (24) und/oder einen polarisierenden Strahlteiler sowie einen Zirkularpolarisator (25) für polarisierte Laserstrahlen (6) oder einen Polarisationsfilter (24) und/oder einen polarisierenden Strahlteiler zum Aufteilen zirkular polarisierter Laserstrahlung (6) in ihre linear polarisierte Bestandteile und einen Faraday-Rotator und einen Polarisationsfilter (24) und/oder einen polarisierenden Strahlteiler zum Vereinigen der linear polarisierten Bestandteile aufweist.

12. Vorrichtung nach einem der vorhergehenden Ansprüche, **dadurch gekennzeichnet, dass** die mehreren Strahlungsquellen (5) und/oder die Laserstrahlen (6) ringförmig um die Einrichtung (4) zum Zuführen von Zusatzwerkstoff (3) angeordnet sind.

13. Vorrichtung nach Anspruch 12, **dadurch gekennzeichnet, dass** mehrere Strahlungsquellen (5) vorgesehen sind, deren Laserstrahlen (6) sich in einem Schnittbereich kreuzen, wobei der Zusatzwerkstoff (3) durch diesen Schnittbereich geführt ist und/oder dass zum Ausbilden eines ringförmigen Strahlungsfelds mindestens ein Axicon (8, 9) im Strahlengang mindestens eines Laserstrahls angeordnet ist, wobei bevorzugt in dem nicht vom Laserstrahl (6) bestrahlten freien Bereich (7) des ringförmigen Strahlungsfelds die Einrichtung (4) zum Zuführen von Zusatzwerkstoff (3) angeordnet ist und/oder ein Element (10, 11, 12), mit dem die Intensität des Laserstrahls (6) innerhalb des Bearbeitungsbereichs lokal definiert veränderbar ist, vorgesehen ist, das vorzugsweise ein Polarisator, ein Polarisatorenpaar mit jeweils unterschiedlicher Polarisationsachse, ein Farbfilter, eine Blende, eine Strahlfalle oder ein Shutter ist und/oder die Strahlungsquelle (5) als Diodenlaser ausgebildet ist, vorzugsweise als Diodenlaserstacks, Diodenlaserbarren und/oder Single-Emitter-Laser und/oder die Strahlungsquelle (5) oder die mehreren Strahlungsquellen (5) und/oder das mindestens eine Element (10, 11, 12) innerhalb eines Gehäuses (17) angeordnet sind.

14. Verfahren zum thermischen Bearbeiten innerhalb eines Bearbeitungsbereichs (1) an einer Werkstückoberfläche (2) mittels von mehreren Strahlungsquellen (5) emittierten Laserstrahlen (6), bei dem durch eine Steuereinheit (14) die Intensität mindestens eines der Laserstrahlen (6) innerhalb des Bearbeitungsbereichs (1) lokal definiert durch eine definierte Ansteuerung mehrerer der Strahlungsquellen (5) verändert wird, so dass innerhalb des Bearbeitungsbereichs (1) eine lokal definierte Verteilung der Intensität der auf die Werkstückoberfläche auftreffenden Laserstrahlen (6) erreicht wird, **dadurch gekennzeichnet, dass** eine ungerade Anzahl von mehreren Strahlungsquellen (5) und Laserstrahlen (6) und/oder eine Anordnung von mehreren Strahlungsquellen (5) und Laserstrahlen (6) in einer unsymmetrischen Anordnung vorliegt und einander gegenüberliegende Strahlungsquellen (5) Laserstrahlen (6) unterschiedlicher Wellenlänge emittieren, wobei die emittierten Laserstrahlen (6) so auf/in den Bearbeitungsbereich (1) gerichtet werden, dass innerhalb des Bearbeitungsbereichs (1) ein nicht von Laserstrahlen (6) bestrahlter freier Bereich (7) vorhanden ist, wobei die Zufuhr des Zusatzwerkstoffs (3) in den freien Bereich (7) erfolgt.

15. Verfahren nach Anspruch 14, **dadurch gekennzeichnet, dass** die von mehreren Strahlungsquellen (5) emittierten Laserstrahlen (6) als einzelne Laserstrahlen (6) auf den Bearbeitungsbereich (1) gerichtet werden und mindestens einer der Laserstrahlen (6) eine von den weiteren Laserstrahlen (6) abweichende Brennweite aufweist, die durch ein im Strahlengang dieses Laserstrahls (6) angeordnetes und entlang des Strahlengangs verschiebbaren refraktives oder diffraktives optisches Element (13) eingestellt wird und/oder mindestens einer der Laserstrahlen (6) durch ein gegenüber der optischen Achse unter einem von 90° abweichenden Winkel angeordnetes diffraktives oder refraktives optisches Element (13) und/oder eine Blende mit einem in seiner Form von den übrigen Laserstrahlen (6) unterschiedlichen Strahlquerschnitt ausgebildet wird und/oder mindestens einer der von den Strahlungsquellen (5) emittierten Laserstrahlen (6) in seiner Leistung zeitlich variiert wird, wobei vorzugsweise mehrere der Laserstrahlen nacheinander oder zeitgleich in ihrer Leistung variiert oder ausgeschaltet werden und/oder eine Temperatur des Bearbeitungsbereichs (1) durch ein Temperaturmesssystem (16) überwacht wird.

## Claims

1. A device for thermal processing within a processing region (1) at a workpiece surface (2) by means of laser beams (6) emitted by a plurality of radiation sources (5), comprising a control unit (14), which is designed to change the intensity of at least one of the laser beams (6) within the processing region (1) in a locally defined manner by a defined actuation of a plurality of the radiation sources (5), such that, within the processing region (1), a locally defined distribution of the intensity of the laser beams (6) impinging on the workpiece surface (2) can be achieved, **characterized in that**
the opposite radiation sources (5) emit laser beams (6) of different wavelengths, a plurality of radiation sources (5) and laser beams (6) are present in an odd number, and/or a plurality of radiation sources (5) and laser beams (6) are present in an asymmetric arrangement, and an apparatus (4) for supplying additional material (3) to/in the processing region (1) being present and the emitted laser beams (6) being directed toward/into the processing region (1) such that a free region (7) that is not irradiated by laser beams (6) is present within the processing region (1), the additional material (3) being supplied to the free region (7).

2. The device according to claim 1, **characterized in that** the laser beams (6) emitted by a plurality of radiation sources (5) are directed toward the processing region (1) in the form of individual laser beams (6) and/or
**in that** the plurality of radiation sources (5) and/or the laser beams (6) are arranged in an annular manner.

3. The device according to claim 2, **characterized in that** the plurality of radiation sources (5) and/or the laser beams (6) are arranged in at least two rings, the rings preferably being concentric.

4. The device according to any of claims 2 or 3, **characterized in that** at least one of the laser beams (6) is directed toward/into the processing region (1) at a focal length that differs from that of the further laser beams (6), the focal length of one of the laser beams (6) preferably being able to be influenced using a refractive or diffractive optical element (13), and the focal length of each of the laser beams (6) particularly preferably being able to be influenced by a refractive or diffractive optical element that is assigned to the radiation source (5) emitting the relevant laser beam.

5. The device according to any of claims 2 to 4, **characterized in that** at least one of the laser beams (6) is directed into the processing region (1) with a power that differs from that of remaining laser beams (6) and/or at least one of the laser beams (6) has a beam cross section that differs from that of remaining laser beams (6) in terms of its shape.

6. The device according to claim 5, **characterized in that** the beam cross section is influenced in terms of its shape by a diffractive or refractive optical element (13) that is arranged at an angle deviating from 90° in relation to the optical axis and/or by a stop.

7. The device according to any of claims 4 to 6, **characterized in that** the diffractive or refractive optical element (13) is movable by an electromechanical actuator.

8. The device according to any of the preceding claims, **characterized in that** a plurality of radiation sources (5) are each provided with light-guiding fibers (18) and at least two of the light-guiding fibers (18) are preferably combined to form a fiber bundle, in which the light-guiding fibers are particularly preferably so close together that a collimating optics unit can be used for the fiber bundle and/or the plurality of radiation sources (5) are actuatable independently of one another by regulable electrical resistors assigned to the respective radiation sources (5) and/or by electrical or electronic bypass circuits assigned to the respective radiation sources (5) and/or each radiation source (5) is operable individually by a controllable or regulable electronic power source and is individually deactivatable.

9. The device according to any of the preceding claims, **characterized in that** a plurality of radiation sources (5) each emit a laser beam (6), at least one of the laser beams (6) having a polarization that differs from that of remaining laser beams and/or at least one of the radiation sources (5) has an optical diode.

10. The device according to claim 9, **characterized in that** at least one of the radiation sources (5) has a wavelength filter which is only transmissive for the wavelength of the laser beam (6) emitted by the relevant radiation source.

11. The device according to claim 9, **characterized in that** the optical diode comprises a polarization filter (24) and/or a polarizing beam splitter as well as a circular polarizer (25) for polarized laser beams (6) or a polarization filter (24) and/or a polarizing beam splitter for splitting circularly polarized laser beams (6) into their linearly polarized constituents and a Faraday rotator and a polarization filter (24) and/or a polarizing beam splitter for merging the linearly polarized constituents.

12. The device according to any of the preceding claims, **characterized in that** the plurality of radiation sources (5) and/or the laser beams (6) are arranged in an annular manner around the apparatus (4) for supplying additional material (3).

13. The device according to claim 12, **characterized in that** a plurality of radiation sources (5) are provided, of which the laser beams (6) cross in an intersection region, the additional material (3) being guided through this intersection region and/or **in that** at least one axicon (8, 9) is arranged in the beam path of at least one laser beam to form an annular radiation field, the apparatus (4) for supplying additional material (3) preferably being arranged in the free region (7) of the annular radiation field that is not irradiated by the laser beam (6) and/or an element (10, 11, 12) being provided by means of which the intensity of the laser beam (6) can be changed within the processing region in a locally defined manner and which is preferably a polarizer, a polarizer pair having respectively different polarization axes, a color filter, a stop, a beam trap, or a shutter and/or the radiation source (5) being designed as a diode laser, preferably as diode laser stacks, diode laser bar, and/or single emitter laser, and/or the radiation source (5) or the plurality of radiation sources (5) and/or the at least one element (10, 11, 12) being arranged within a housing (17).

14. A method for thermal processing within a processing region (1) at a workpiece surface (2) by means of laser beams (6) emitted by a plurality of radiation sources (5), in which the intensity of at least one of the laser beams (6) within the processing region (1) is changed by a control unit (14) in a locally defined manner by a defined actuation of a plurality of the radiation sources (5), such that, within the processing region (1), a locally defined distribution of the intensity of the laser beams (6) impinging on the workpiece surface is achieved, **characterized in that** opposite radiation sources (5) emit laser beams (6) of different wavelengths, a plurality of radiation sources (5) and laser beams (6) are present in an odd number, and/or a plurality of radiation sources (5) and laser beams (6) are present in an asymmetric arrangement, and
the emitted laser beams (6) being directed toward/into the processing region (1) such that a free region (7) that is not irradiated by laser beams (6) is present within the processing region (1), the additional material (3) being supplied to the free region (7).

15. The method according to claim 14, **characterized in that** the laser beams (6) emitted by a plurality of radiation sources (5) are directed toward the processing region (1) in the form of individual laser beams (6) and at least one of the laser beams (6) has a focal length that differs from that of the further laser beams (6) and is adjusted by a refractive or diffractive optical element (13) arranged in the beam path of this laser beam (6) and displaceable along the beam path and/or at least one of the laser beams (6) is formed by a diffractive or refractive optical element (13) that is arranged at an angle deviating from 90° in relation to the optical axis and/or by a stop and has a beam cross section that differs from that of remaining laser beams (6) in terms of its shape and/or at least one of the laser beams (6) emitted by the radiation sources (5) is varied over time in terms of its power, a plurality of the laser beams preferably being varied in their power or switched off in succession or simultaneously and/or a temperature of the processing region (1) being monitored by a temperature-measuring system (16).

## Revendications

1. Dispositif pour l'usinage thermique à l'intérieur d'une zone d'usinage (1) sur une surface de pièce (2) au moyen de faisceaux laser (6) émis par plusieurs sources de rayonnement (5), avec une unité de commande (14), qui est réalisée pour modifier l'intensité d'au moins un des faisceaux laser (6) à l'intérieur de la zone d'usinage (1) de manière définie localement par une commande définie de plusieurs des sources de rayonnement (5), de sorte qu'une répartition définie localement de l'intensité des faisceaux laser (6) arrivant sur la surface de pièce (2) peut être obtenue à l'intérieur de la zone d'usinage (1), **caractérisée en ce**
**qu'**un nombre impair de plusieurs sources de rayonnement (5) et de faisceaux laser (6) est présent et/ou un agencement de plusieurs sources de rayonnement (5) et de faisceaux laser (6) est présent dans un agencement asymétrique et dans lequel les sources de rayonnement (5) opposées les unes aux autres émettent des faisceaux laser (6) de différentes longueur d'onde et un système (4) pour l'amenée de matériau d'apport (3) sur/dans la zone d'usinage (1) est présent et les faisceaux laser (6) émis sont ainsi dirigés sur/dans la zone d'usinage (1), qu'une zone libre (7) non irradiée par les faisceaux laser (6) est présente à l'intérieur de la zone d'usinage (1), dans lequel l'amenée du matériau d'apport (3) s'effectue dans la zone libre (7).

2. Dispositif selon la revendication 1, **caractérisé en ce que** les faisceaux laser (6) émis par plusieurs sources de rayonnement (5) sont dirigés sous forme de faisceaux laser (6) individuels sur la zone d'usinage (1) et/ou
**que** les multiples sources de rayonnement (5) et/ou les faisceaux laser (6) sont disposés en forme d'anneau.

3. Dispositif selon la revendication 2, **caractérisé en ce que** les plusieurs sources de rayonnement (5) et/ou les faisceaux laser (6) sont agencés en au moins deux anneaux, lesquels anneaux sont de préférence concentriques.

4. Dispositif selon l'une quelconque des revendications 2 ou 3, **caractérisé en ce qu'**au moins l'un des faisceaux laser (6) est dirigé sur/dans la zone d'usinage (1) avec une distance focale différente des autres faisceaux laser (6), de préférence dans lequel la distance focale d'un des faisceaux laser (6) peut être influencée avec un élément optique réfractif ou diffractif (13), et dans lequel de préférence encore la distance focale de chacun des faisceaux laser (6) peut être influencée par un élément optique réfractif ou diffractif associé à la source de rayonnement (5) émettant le faisceau laser respectif.

5. Dispositif selon l'une quelconque des revendications 2 à 4, **caractérisé en ce qu'**au moins l'un des faisceaux laser (6) est dirigé dans la zone d'usinage (1) avec une puissance différente des autres faisceaux laser (6) et/ou au moins l'un des faisceaux laser (6) présente une section transversale de faisceau dont la forme est différente de celle des autres faisceaux laser (6).

6. Dispositif selon la revendication 5, **caractérisé en ce que** la section transversale de faisceau est influencée dans sa forme par un élément optique diffractif ou réfractif (13) disposé sous un angle différent de 90° par rapport à l'axe optique et/ou par un diaphragme.

7. Dispositif selon l'une quelconque des revendications 4 à 6, **caractérisé en ce que** l'élément optique diffractif ou réfractif (13) est mobile à l'aide d'un élément de réglage électromécanique.

8. Dispositif selon l'une quelconque des revendications précédentes, **caractérisé en ce que** plusieurs sources de rayonnement (5) sont chacune pourvues de fibres optiques (18) et de préférence au moins deux des fibres optiques (18) sont réunies en un faisceau de fibres, pour lequel les fibres optiques se situent de préférence encore de manière si proche les unes des autres qu'une optique de collimation peut être utilisée pour le faisceau de fibres et/ou les plusieurs sources de rayonnement (5) peuvent être commandées indépendamment les unes des autres par des résistances électriques réglables associées aux sources de rayonnement (5) respectives et/ou par des circuits de dérivation électriques ou électroniques associés aux sources de rayonnement (5) respectives et/ou la source de rayonnement (5) respective peut être exploitée respectivement individuellement par une source de courant électronique commandable ou réglable et peut être coupée individuellement.

9. Dispositif selon l'une quelconque des revendications précédentes, **caractérisé en ce que** plusieurs sources de rayonnement (5) émettent chacune un faisceau laser (6), dans lequel au moins l'un des faisceaux laser (6) présente une polarisation différente des autres faisceaux laser et/ou au moins l'une des sources de rayonnement (5) présente une diode optique.

10. Dispositif selon la revendication 9, **caractérisé en ce qu'**au moins l'une des sources de rayonnement (5) présente un filtre de longueur d'onde qui n'est transmissif que pour la longueur d'onde du faisceau laser (6) émise par la source de rayonnement respective.

11. Dispositif selon la revendication 9, **caractérisé en ce que** la diode optique présente un filtre de polarisation (24) et/ou un diviseur de faisceau polarisant à l'image d'un polariseur circulaire (25) pour des faisceaux laser (6) polarisés ou un filtre de polarisation (24) et/ou un diviseur de faisceau polarisant pour diviser un rayonnement laser (6) polarisé circulairement en ses composants polarisés linéairement et un rotateur de Faraday et un filtre de polarisation (24) et/ou un diviseur de faisceau polarisant pour réunir les composants polarisés linéairement.

12. Dispositif selon l'une quelconque des revendications précédentes, **caractérisé en ce que** les multiples sources de rayonnement (5) et/ou les faisceaux laser (6) sont disposés en forme d'anneau autour du système (4) pour l'amenée de matériau d'apport (3).

13. Dispositif selon la revendication 12, **caractérisé en ce que** plusieurs sources de rayonnement (5) sont prévues, dont les faisceaux laser (6) se croisent dans une zone de coupe, dans lequel le matériau d'apport (3) est guidé à travers cette zone de coupe et/ou que, pour la réalisation d'un champ de rayonnement annulaire, au moins un axicon (8, 9) est disposé dans la trajectoire d'au moins un faisceau laser, dans lequel le système (4) pour l'amenée de matériau d'apport (3) est de préférence disposé dans la zone libre (7) du champ de rayonnement annulaire non irradiée par le faisceau laser (6), et/ou un élément (10, 11, 12), pour lequel l'intensité du faisceau laser (6) peut être modifiée de manière définie localement à l'intérieur de la zone d'usinage, est prévu, qui est de préférence un polariseur, une paire de polariseurs avec respectivement un axe de polarisation différent, un filtre de couleur, un diaphragme, un piège à faisceau ou un obturateur et/ou la source de rayonnement (5) est réalisée comme un laser à diodes, de préférence comme des piles de laser à diodes, des barres de laser à diodes et/ou des lasers à émetteur unique et/ou la source de rayonnement (5) ou les plusieurs sources de rayonnement (5) et/ou le au moins un élément (10, 11, 12) sont disposés à l'intérieur d'un boîtier (17).

14. Procédé pour l'usinage thermique à l'intérieur d'une zone d'usinage (1) sur une surface de pièce (2) au moyen de faisceaux laser (6) émis par plusieurs sources de rayonnement (5), selon lequel l'intensité d'au moins l'un des faisceaux laser (6) est modifiée par une unité de commande (14) à l'intérieur de la zone d'usinage (1) de manière définie localement par une commande définie de plusieurs des sources de rayonnement (5), de sorte qu'une répartition définie localement de l'intensité des faisceaux laser (6) arrivant sur la surface de pièce est obtenue à l'intérieur de la zone d'usinage (1), **caractérisé en ce qu'**un nombre impair de plusieurs sources de rayonnement (5) et de faisceaux laser (6) et/ou un agencement de plusieurs sources de rayonnement (5) et de faisceaux laser (6) est présent dans un agencement asymétrique et des sources de rayonnement (5) opposées les unes aux autres émettent des faisceaux laser (6) de longueur d'onde différente, et
dans lequel les faisceaux laser (6) émis sont ainsi dirigés sur/dans la zone d'usinage (1), qu'une zone libre (7) non irradiée par les faisceaux laser (6) est présente à l'intérieur de la zone d'usinage (1), dans lequel l'amenée du matériau d'apport (3) s'effectue dans la zone libre (7).

15. Procédé selon la revendication 14, **caractérisé en ce que** les faisceaux laser (6) émis par plusieurs sources de rayonnement (5) sont dirigés sous forme de faisceaux laser (6) individuels sur la zone d'usinage (1) et au moins l'un des faisceaux laser (6) présente une distance focale différente des autres faisceaux laser (6), qui est ajustée par un élément optique réfractif ou diffractif (13) disposé dans la trajectoire de ce faisceau laser (6) et pouvant être déplacé le long de la trajectoire et/ou au moins un des faisceaux laser (6) est réalisé par un élément optique réfractif ou diffractif (13) disposé sous un angle différent de 90° par rapport à l'axe optique et/ou un diaphragme avec une section transversale de faisceau différente dans sa forme des autres faisceaux laser (6) et/ou au moins l'un des faisceaux laser (6) émis par les sources de rayonnement (5) est modifié dans sa puissance dans le temps, dans lequel de préférence la puissance de plusieurs des faisceaux laser est changée ou coupée successivement ou simultanément et/ou une température de la zone d'usinage (1) est surveillée par un système de mesure de température (16).
